# EUROPÄISCHE PATENTANMELDUNG

(11) **EP 2 325 505 A2**
(43) Veröffentlichungstag der Anmeldung: **25.05.2011**
(21) Anmeldenummer: 10014731.3
(22) Anmeldetag: 18.11.2010
(51) Int. Cl.: F16B 15/00, F16B 11/00

(54) **Nagel zum Eintreiben in mindestens ein nicht vorgelochtes Bauteil**

(30) Priorität: 19.11.2009 DE 102009053848
(71) Anmelder: Audi AG, 85045 Ingolstadt (DE)
(72) Erfinder: Hußmann, Dominik, Dr., 85110 Kipfenberg (DE); De Sousa Schmiech, Pedro, 74211 Leingarten (DE); Stendtke, Alexander, 33104 Paderborn (DE)
(74) Vertreter: Patzelt, Heike Anna Maria

(57) **Zusammenfassung**

Die Erfindung betrifft einen Nagel (1) zum im Wesentlichen drehungsfrei axialen Eintreiben in mindestens ein nicht vorgelochtes Bauteil (2, 3), vorzugsweise zum Verbinden von zwei oder mehreren Bauteilen (2, 3), umfassend einen Nagelkopf (1a), einen Nagelschaft (1b) und eine Nagelspitze (1c). Erfindungsgemäß ist eine durch das Eintreiben des Nagels (1) mit wenigstens einem Bauteil (2, 3) in Kontakt kommende Oberfläche (5, 7) des Nagels (1) zumindest teilweise mit einer Klebstoffschicht (4) versehen. Vorzugsweise kann die Klebstoffschicht (4) in eine auf der Unterseite des Nagelkopfes (1a) umlaufende Ringnut (5) und/oder in eine Oberflächenprofilierung (6) auf dem Nagelschaft (1 b) eingebracht werden.

## Beschreibung

Die Erfindung betrifft einen Nagel zum im Wesentlichen drehungsfrei axialen Eintreiben in mindestens ein nicht vorgelochtes Bauteil, vorzugsweise zum Verbinden von zwei oder mehreren Bauteilen gemäß Oberbegriff des Patentanspruchs 1.

Aus der DE 10 2006 002 238 A1 ist ein solcher Nagel bekannt, der einen Nagelkopf mit einer an der Kopfunterseite vorgesehenen Ringnut, einen Nagelschaft mit einer Oberflächenprofilierung und eine Nagelspitze aufweist. Das Verfahren zur Herstellung einer Nagelverbindung zwischen zwei ungelochten Bauteilen mittels eines solchen Nagels besteht darin, den Nagel mittels eines Setzgerätes mit hoher Geschwindigkeit im Fügebereich in die Bauteile im Wesentlichen drehungsfrei axial so einzutreiben, dass die Nagelspitze und der Nagelschaft in die Bauteile eindringen, bis der Nagelkopf an der Oberseite des Bauteils aufliegt und die Nagelspitze im nagelkopfabgewandten Bauteil austritt.

Um die Verbindungsqualität einer solchen Nagelverbindung zu erhöhen, wird in der DE 10 2007 033 126 A1 vorgeschlagen, zwischen den zu verbindenden Bauteilen eine Klebeschicht anzuordnen. Dabei ist die Spaltbreite des den Klebstoff enthaltenden Spalts zwischen den Bauteilen so gewählt, dass sich der nur in Eintreibrichtung ausbildende Materialkragen des nagelkopfseitigen Bauteils am nagelkopfabgewandten Bauteil abstützt und damit den Spalt zwischen dem nagelkopfseitigen und dem nagelkopfabgewandten Bauteil überbrückt, so dass der Klebstoff zwischen den beiden Bauteilen im an den Fügebereich angrenzenden Bereich nicht verdrängt wird und damit auch kein Kontakt des Klebstoffes mit dem Nagel entsteht.

Ferner ist aus der DE 10 2008 018 429 A1 ein Verfahren zum Setzen eines Nagels bekannt, das einen Nagel verwendet, der außer einer Nagelspitze, einem Nagelschaft mit Oberflächenprofilierung und einem Nagelkopf zusätzlich einen am Nagelkopf angeformten Funktionsabschnitt aufweist. Dieser Funktionsabschnitt dient dazu, weitere Bauteile anzubringen und kann bspw. ein teilkugelförmiger Gelenkkopf für die Kugelpfanne einer Steckkupplung, ein mit einem Sägezahnprofil versehener Bolzen oder ein Halteabschnitt mit einer Hinterschneidung zum Einrasten eines zu haltenden Gegenstandes darstellen.

Ein solcher Nagel mit Funktionsabschnitt wird in bekannter Weise mit einem Setzgerät in mindestens ein Bauteil im Wesentlichen drehungsfrei axial eingetrieben, bis der Nagelkopf an der Oberseite des Bauteils aufliegt. Dabei kann zur Herstellung einer Nagelverbindung zwischen zwei Bauteilen das oben beschriebene Verfahren aus der DE 10 2007 033 126 A1 verwendet werden, wonach die beiden Bauteile über eine Klebstoffschicht miteinander verklebt werden.

Besteht ein Funktionsabschnitt dieses bekannten Nagels bspw. aus einem Gewindebolzen, an den ein weiteres Bauteil angeschraubt wird, ist eine Drehsicherung an dem Nagel vorgesehen, um das Anziehen und Lösen der Verschraubung zu ermöglichen. Als Drehsicherung wird in dieser Druckschrift bspw. eine Rändelung oder eine andere Aufrauhung an der Unterseite des Nagelkopfes vorgeschlagen, die sich zusätzlich zu der dort umlaufenden Ringnut zur Aufnahme des beim Eintreiben entstehenden Materialaufwurfes befindet.

Nachteil dieses bekannten Nagels mit Funktionsabschnitt und Verdrehsicherung liegt darin, dass das aufzunehmende Drehmoment für viele Anwendungen zu gering ist. Zumal die restliche Fügeenergie, die in diesem Stadium des Setzvorganges noch vorhanden ist, zu gering ist, um diese Verdrehsicherung in die Oberfläche des oberen Bauteils einzupressen und so eine Verdrehsicherung des Nagels bewirken zu können. Zudem würde dadurch auch das obere Bauteil entscheidend geschwächt.

Schließlich sind aus der DE 10 2006 058 935 A1 stiftartige Verbundmittel, wie bspw. Schrauben, Nägel, Splinte, Bolzen oder Nieten bekannt. Bei diesem bekannten Verbundmittel wird gegen ein unbeabsichtigtes Lösen einer mit diesen Verbundmitteln zwischen Bauteilen hergestellten Verbindung ein Verbundmittel-Sicherungselement in der Art einer Unterlegscheibe zwischen dem Kopf des Verbundmittels und dem verbundmittelkopfseitigen Bauteil eingelegt. Dieses Verbundmittel-Sicherungselement ist als beidseitig hitze-aktiviert verklebendes Flächenelement ausgebildet. Die Hitzeaktivierung erfolgt durch kurzzeitiges Erhitzen des Verbundmittel-Sicherungselement, um so die Sicherungswirkung zu erzielen. Die Sicherungswirkung besteht nicht nur gegen ein Herauslösen des stiftartigen Verbundmittels aus der Verbindung, sondern auch gegenüber einem teilweisen Lösen, bei dem das stiftartige Verbundmittel in den zu verbindenden Materialien verbleibt, aber die Verbindung ein Spiel enthält, so dass die verbundenen Bauteile gegeneinander verschiebbar sind und das stiftartige Verbundmittel in den Bauteilen drehbar gelagert wird.

Der Nachteil dieses Verfahrens zur Herstellung einer Nagelverbindung mit einem solchen bekannten Verbundmittelkopf-Sicherungselement liegt insbesondere in dem zusätzlich neben dem stiftartigen Verbundmittel für die Nagelverbindung erforderlichen Sicherungselement und dem aufwändigeren Fertigungsprozess und betrifft insbesondere das Einlegen dieses bekannten Sicherungselements und dessen Hitzeaktivierung.

Aufgabe der Erfindung ist es daher, einen Nagel der eingangs genannten Art anzugeben, mit dem eine Nagelverbindung mit hoher Verbindungsqualität, insbesondere mit einer einfachen und wirksamen Verdrehsicherung erzielbar ist.

### Diese Aufgabe wird gelöst durch einen Nagel mit den Merkmalen des Patentanspruchs 1.

Bei einem solchen Nagel zum im Wesentlichen drehungsfrei axialen Eintreiben in mindestens ein nicht vorgelochtes Bauteil, vorzugsweise zum Verbinden von zwei oder mehreren Bauteilen, umfassend einen Nagelkopf, einen Nagelschaft und eine Nagelspitze, ist erfindungsgemäß eine durch das Eintreiben des Nagels mit wenigstens einem Bauteil in Kontakt kommende Oberfläche des Nagels zumindest teilweise mit einer Klebstoffschicht versehen.

Ein solcher erfindungsgemäße Nagel ist einfach herzustellen und ebenso fertigungstechnisch einfach einzusetzen und führt aufgrund der Verklebung des Nagels mit dem Bauteil zu einer Erhöhung der Verdrehsicherheit und damit insgesamt zu einer besseren Verbindungsqualität.

Bei einer vorteilhaften Weiterbildung der Erfindung weist der Nagelkopf an seiner Unterseite angrenzend an den Nagelschaft eine umlaufende Ringnut auf, in der die Klebstoffschicht angeordnet ist. Damit wird wirksam eine Verdrehsicherung des erfindungsgemäßen Nagels gegen das nagelkopfseitige Bauelement erzielt. Dies ist besonders dann sehr wirkungsvoll, wenn ein solcher Nagel mit einem Funktionsabschnitt ausgestattet wird, wie dies bspw. aus der DE 10 2008 018 429 A1 bekannt ist, wenn also der Nagelkopf über einen solchen Funktionsabschnitt, bspw. Gewinde- oder Clipbolzen ein Drehmoment oder eine sonstige Belastung übernehmen und tragen muss.

Besonders hochwertige Nagelverbindung wird gemäß einer Weiterbildung der Erfindung erreicht, wenn der Nagelschaft bereichsweise mit einer Oberflächenprofilierung ausgebildet ist, und die Klebstoffschicht zumindest bereichsweise auf dieser Oberflächenprofilierung angeordnet ist. Die dadurch wenigstens teilweise erzielte Verklebung des Nagelschaftes mit den Bauteilen führt zu einer hohen Verbindungsfestigkeit. Da eine solche Klebeverbindung, insbesondere wenn sie vollständig zwischen der Kontaktfläche des Nagelschaftes und den Bauteilen hergestellt wird, nicht nur einen Kraftschluss, sondern auch einen Stoffschluss darstellt, werden höhere Festigkeiten, insbesondere auch unter schwingender Belastung erzielt.

Besonders vorteilhaft ist es, wenn die Oberflächenprofilierung aus Vertiefungen und Erhöhungen gebildet wird und die Klebstoffschicht wenigstens in den Vertiefungen angeordnet ist, wodurch sie aufgrund des Eintreibens des Nagels in Bauteile mit in die Nagelverbindung gezogen wird und sich auf der Kontaktfläche zwischen Nagelschaft und Material der Bauteile verteilen kann.

Die Oberflächenprofilierung auf dem Nagelschaft kann gemäß einer Weiterbildung der Erfindung im Axialschnitt wellen- oder sinusförmig ausgebildet werden. Auch eine sägezahnförmig ausgebildete Profilierung ist vorteilhaft, da sich hierdurch das Ausziehmoment des Nagels erhöht. Eine ähnliche Wirkung wird erzielt, wenn die Vertiefungen der Oberflächenprofilierung mit einer dem Nagelkopf zugewandten konkaven Flanke und mit einer der Nagelspitze zugewandten konvexen Flanke ausgebildet sind.

Besonders bevorzugt ist gemäß der Erfindung die Verwendung einer Klebstoffschicht aus mikroverkapselten Klebstoff, die in der Ringnut auf der Unterseite des Nagelkopfes oder in den Vertiefungen der Oberflächenprofilierung des Nagelschaftes eingelagert ist. Beim Setzvorgang, d. h. beim Eintreiben des erfindungsgemäßen Nagels werden die Mikrokapseln des Klebstoffs abgeschert und platzen auf, wodurch die in den Kapseln eingeschlossenen Komponenten freigesetzt werden und miteinander reagieren können, um anschließend auszuhärten.

Die Erfindung wird nachfolgend anhand von Ausführungsbeispielen unter Bezugnahme auf die beigefügten Figuren ausführlich beschrieben. Es zeigen:
- Figur 1: eine Querschnittsansicht einer Nagelverbindung zwischen zwei Bauteilen mit einem ersten Ausführungsbeispiel eines erfindungsgemäßen Nagels,
- Figur 2: eine Seitenansicht des in Figur 1 in der Nagelverbindung eingesetzten erfindungsgemäßen Nagels,
- Figur 3: eine Querschnittsansicht einer Nagelverbindung zwischen zwei Bauteilen mit einem zweiten Ausführungsbeispiel eines erfindungsgemäßen Nagels, und
- Figur 4: eine Seitenansicht des in Figur 3 in der Nagelverbindung eingesetzten erfindungsgemäßen Nagels.

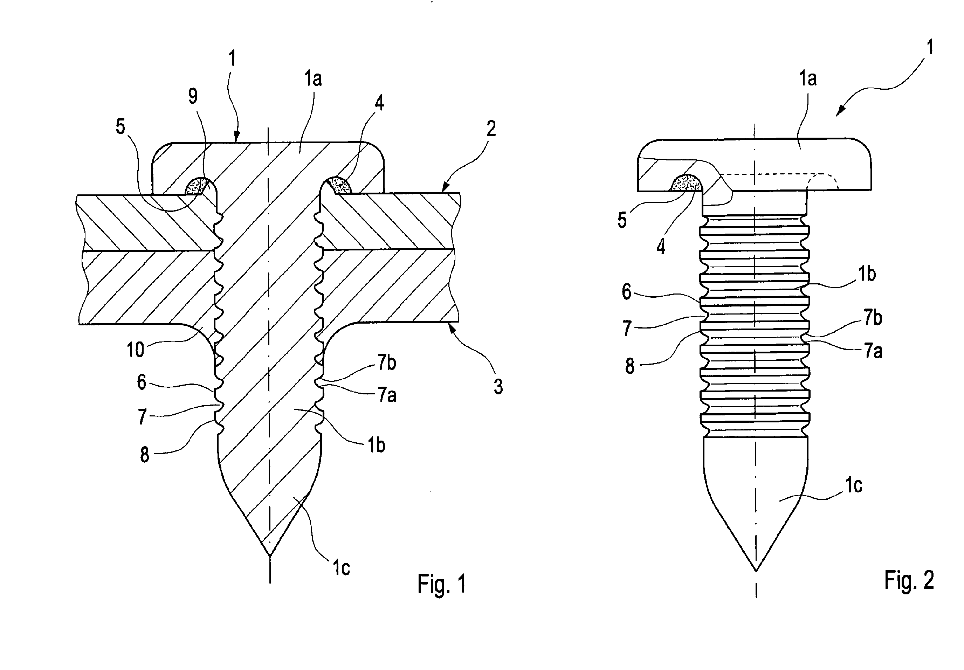

Der in den Figuren 1 und 2 gezeigt erfindungsgemäße Nagel 1 besteht aus einem Nagelkopf 1 a, einem eine Oberflächenprofilierung 6 aufweisenden Nagelschaft 1b sowie einer eine ogivale Form aufweisende Nagelspitze 1 c. Der Nagelschaft 1 b ist nur in einem mittleren Abschnitt des Nagelschaftes 1 b profiliert, weist also sowohl zum Nagelkopf 1 a hin als auch zur Nagelspitze 1c hin einen geraden unprofilierten Abschnitt auf.

Die Oberflächenprofilierung 6 auf dem Nagelschaft 1b ist mit Vertiefungen 7 und Erhebungen 8 ausgebildet und kann im Axialschnitt wellen- oder sinusförmig ausgebildet werden. Der Nagel 1 gemäß den Figuren 1 bis 2 weist dagegen Vertiefungen 7 auf, deren zum Nagelkopf 1 a gerichtete Flanken 7a konkav und deren zur Nagelspitze 1 c gerichteten Flanken 7b konvex ausgebildet sind.

Auch ist es möglich, die Profilierung 6 des Nagels 1 im Axialschnitt sägezahnförmig auszubilden (in den Figuren nicht dargestellt).

Auf der Unterseite des als Flachkopf ausgebildeten Nagelkopfes 1 a ist eine an den Nagelschaft 1b angrenzende, umlaufenden Ringnut 5 angeordnet, in die eine Klebstoffschicht 4 aus Mikokapseln eingelagert ist. Ein solcher Klebstoff besteht aus in kleinen Kapseln eingeschlossenen und aushärtbarem Flüssigklebstoff aus mehreren Komponenten.

Die Figur 1 zeigt eine mit dem erfindungsgemäßen Nagel 1 gemäß Figur 2 hergestellte Nagelverbindung. Durch im Wesentlichen drehungsfrei axiales Eintreiben des Nagels 1 in den entsprechenden Fügebereich der beiden nicht vorgelochten Bauteile 2 und 3 platzen die Mikrokapseln der Klebstoffschicht 4 aufgrund des Druckes auf, der in dem Raum der Ringnut 5 entsteht, wenn die Unterseite des Nagelkopfes 1 a nach dem Eintreiben auf der Oberfläche des Bauteils 2 aufliegt und auch Material des aufgrund des Eintreibens entstehenden Materialaufwurfs 9 in diese Ringnut 5 gedrückt wird, wodurch die Komponenten des Klebstoffs vermischt werden und anschließend aushärten können.

Dadurch verklebt der Nagel 1 am nagelkopfseitigen Bauteil 2 und sorgt somit für eine Verdrehsicherung des Nagels 1 gegen eine Drehbewegung dieses Bauteils 2. Der ausgehärtete Klebstoff in dem von der Ringnut 5 gebildeten Hohlraum sorgt auch für eine Verdrehsicherung bei solchen Nägeln, die mit einem Funktionsabschnitt ausgestattet sind, wie dies bspw. aus der DE 10 2008 018 429 A1 bekannt ist, wenn also der Nagelkopf über einen solchen Funktionsabschnitt, bspw. Gewinde- oder Clipbolzen ein Drehmoment oder eine sonstige Belastung übernehmen und tragen muss. Auch ist es möglich, einen solchen Funktionsabschnitt an der Nagelspitze vorzusehen, indem bspw. nach dem Eintreiben des Nagels an die Nagelspitze bspw. ein Gewinde- oder Clipbolzen angeschweißt wird.

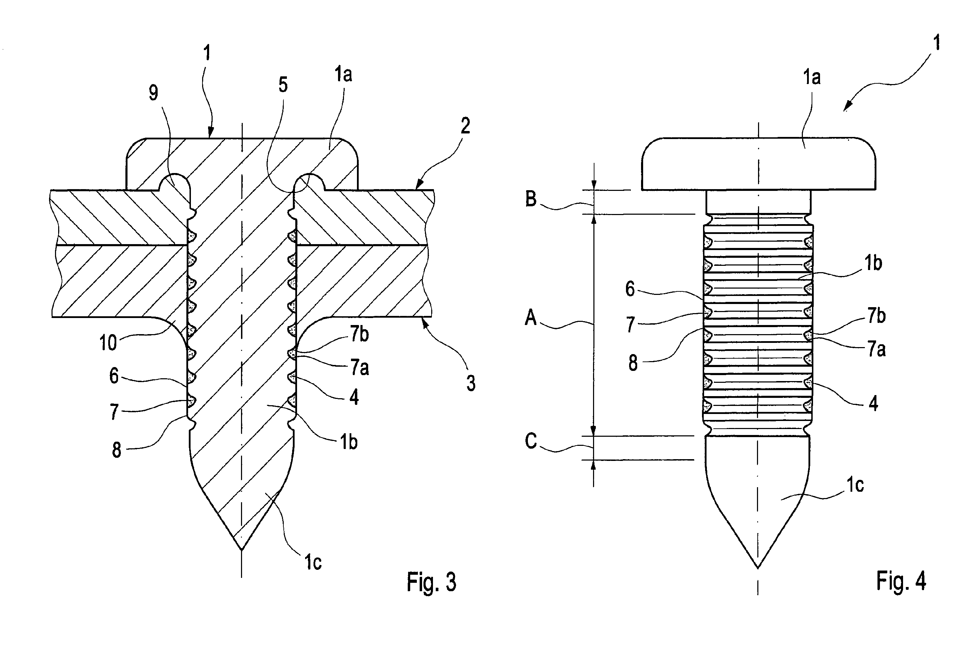

Der in den Figuren 3 und 4 gezeigt erfindungsgemäße Nagel 1 besteht ebenso aus einem Nagelkopf 1a, einem eine Oberflächenprofilierung 6 aufweisenden Nagelschaft 1b sowie einer eine ogivale Form aufweisende Nagelspitze 1c. Auf der Unterseite des als Flachkopf ausgebildeten Nagelkopfes 1a ist eine an den Nagelschaft 1b angrenzende, umlaufenden Ringnut 5 angeordnet, in die, wie in Figur 3 dargestellt ist, Material des während des Eintreibens des Nagels 1 in die Bauteile 2 und 3 entgegen der Eintreibrichtung entstehenden Materialaufwurfs 9 eindringt, wenn die Unterseite des Nagelkopfes 1a auf der Oberseite des nagelkopfseitigen Bauelements 2 aufliegt.

Wie aus Figur 4 ersichtlich, ist in einem Schaftabschnitt A auf dem Nagelschaft 1b eine Oberflächenprofilierung 6 vorgesehen. Zwischen diesem profilierten Abschnitt A und dem Nagelkopf 1a befindet sich ein unprofilierter Abschnitt B, ebenso ist im Übergang der Oberflächenprofilierung 6 zur Nagelspitze 1c ein unprofilierter Abschnitt C vorgesehen.

Die Oberflächenprofilierung 6 auf dem Schaftabschnitt A ist mit Vertiefungen 7 und Erhebungen 8 ausgebildet und kann im Axialschnitt wellen- oder sinusförmig ausgebildet werden. Der Nagel 1 gemäß den Figuren 3 bis 4 weist dagegen Vertiefungen 7 auf, deren zum Nagelkopf 1a gerichtete Flanken 7a konkav und deren zur Nagelspitze 1c gerichteten Flanken 7b konvex ausgebildet sind.

Auch ist es möglich, die Profilierung 6 des Nagels 1 im Schaftabschnitt A sägezahnförmig im Axialschnitt auszubilden (in den Figuren nicht dargestellt).

In diese Vertiefungen 7 der Oberflächenprofilierung 6 wird die Klebstoffschicht 4 aus Mikokapseln eingelagert. Ein solcher Klebstoff besteht aus in kleinen Kapseln eingeschlossenen und aushärtbarem Flüssigklebstoff aus mehreren Komponenten. Gemäß Figur 4 erstreckt sich diese Klebstoffschicht 4 im profilierten Schaftabschnitt A über dessen gesamte Umfangsfläche.

Die Figur 3 zeigt eine mit dem erfindungsgemäßen Nagel 1 gemäß Figur 4 hergestellte Nagelverbindung. Durch im Wesentlichen drehungsfrei axiales Eintreiben des Nagels 1 in den entsprechenden Fügebereich der beiden nicht vorgelochten Bauteile 2 und 3 werden die Mikrokapseln abgeschert und platzen auf, wodurch der flüssige Klebstoff aus den Kapseln durch das Eintreiben des Nagels 1 mit in die Nagelverbindung gezogen wird, wo die Komponenten des Klebstoffes sich vermischen und anschließend aushärten können. Dadurch verklebt dieser Nagel 1 in den beiden verbundenen Bauteilen 2 und 3 und führt zu einer hohen Verbindungsfestigkeit.

Diese Klebeverbindung gemäß Figur 3 führt nicht nur zu einem Form- und Kraftschluss, sondern zusätzlich auch zu einem Stoffschluss in der Nagelverbindung, wodurch auch unter schwingender Belastung hohe Festigkeiten zu erzielen sind.

Eine weitere vorteilhafte Wirkung des Klebstoffes liegt in seiner dichtenden Wirkung zwischen dem Nagel 1 und den Bauteilen 2 und 3.

Der während des Eintreibens auf dem nagelkopfseitigen Bauteil 2 entstehende Materialaufwurf 9 wird gemäß Figur 3, wenn die Unterseite des Nagelkopfes 1a auf der Oberseite des nagelkopfseitigen Bauteils 2 aufliegt, in die auf der Unterseite des Nagelkopfes 1a umlaufende Ringnut 5 gedrängt. Ein auf dem nagelkopfabgewandten Bauteil 3 im Bereich der austretenden Nagelspitze 1c entstehender Materialaufwurf 10 ist in Figur 3 ebenso dargestellt.

Die Nagelspitze 1c in einer Nagelverbindung gemäß Figur 3 muss nicht, wie dort dargestellt über die Unterseite des Bauteils 3 hinausragen, sondern kann auch bei entsprechender Dicke dieses Bauteils 3 von diesem vollständig aufgenommen und umschlossen werden.

Natürlich kann auch ein Nagel für eine Nagelverbindung eingesetzt werden, bei dem sowohl in einer auf der Unterseite seines Nagelkopfes umlaufenden Nut eine Klebstoffschicht vorgesehen ist, als auch eine Klebstoffschicht in den Vertiefungen einer Oberflächenprofilierung seines Nagelschaftes eingebracht ist.

### Bezugszeichen

- 1: Nagel
- 1 a: Nagelkopf
- 1b: Nagelschaft
- 1c: Nageispitze
- 2: Bauteil
- 3: Bauteil
- 4: Klebstoffschicht
- 5: Ringnut
- 6: Oberflächenprofilierung auf dem Nagelschaft 1 b
- 7: Vertiefung der Oberflächenprofilierung 6
- 6a: Flanke der Vertiefung 7
- 6b: Flanke der Vertiefung 7
- 8: Erhöhungen der Oberflächenprofilierung 6
- 9: Materialaufwurf auf dem Bauteil 2
- 10: Materialaufwurf auf dem Bauteil 3

## Patentansprüche

1. Nagel (1) zum im Wesentlichen drehungsfrei axialen Eintreiben in mindestens ein nicht vorgelochtes Bauteil (2, 3), vorzugsweise zum Verbinden von zwei oder mehreren Bauteilen (2, 3), umfassend einen Nagelkopf (1a), einen Nagelschaft (1b) und eine Nagelspitze (1c), **dadurch gekennzeichnet, dass** eine durch das Eintreiben des Nagels (1) mit wenigstens einem Bauteil (2, 3) in Kontakt kommende Oberfläche (5, 7) des Nagels (1) zumindest teilweise mit einer Klebstoffschicht (4) versehen ist.

2. Nagel (1) nach Anspruch 1,
**dadurch gekennzeichnet, dass**
- der Nagelkopf (1a) an seiner Unterseite angrenzend an den Nagelschaft (1b) eine umlaufende Ringnut (5) aufweist, und
- die Klebstoffschicht (4) in der Ringnut (5) angeordnet ist.

3. Nagel (1) nach Anspruch 1 oder 2,
**dadurch gekennzeichnet, dass**
- der Nagelschaft (1 b) bereichsweise mit einer Oberflächenprofilierung (6) ausgebildet ist, und
- die Klebstoffschicht (4) zumindest bereichsweise auf der Oberflächenprofilierung (6) angeordnet ist.

4. Nagel (1) nach Anspruch 3,
**dadurch gekennzeichnet, dass**
- die Oberflächenprofilierung (6) aus Vertiefungen (7) und Erhöhungen (8) gebildet ist, und
- die Klebstoffschicht (4) wenigstens in den Vertiefungen (7) angeordnet ist.

5. Nagel (1) nach Anspruch 3 oder 4,
**dadurch gekennzeichnet, dass** die Oberflächenprofilierung (6) im Axialschnitt wellen- oder sinusförmig ausgebildet ist.

6. Nagel (1) nach Anspruch 3 oder 4,
**dadurch gekennzeichnet, dass** die Oberflächenprofilierung (6) im Axialschnitt sägezahnförmig ausgebildet ist.

7. Nagel (1) nach Anspruch 3 oder 4,
**dadurch gekennzeichnet, dass** die Vertiefungen (7) der Oberflächenprofilierung (6) mit einer dem Nagelkopf (1a) zugewandten konkaven Flanke (7a) und mit einer der Nagelspitze (1c) zugewandten konvexen Flanke (7b) ausgebildet sind.

8. Nagel (1) nach einem der vorhergehenden Ansprüche,
**dadurch gekennzeichnet, dass** die Klebstoffschicht (4) aus einem mikroverkapselten Klebstoff besteht.
